# EUROPEAN PATENT APPLICATION

(11) **EP 4 757 091 A1**
(43) Date of publication of application: **10.06.2026**
(21) Application number: 25218402.3
(22) Date of filing: 25.11.2025
(51) Int. Cl.: H02H 5/04, H02H 3/08

(54) **THERMAL OVERLOAD TRANSFER APPARATUS**

(30) Priority: 26.11.2024 US 202463725023 P; 11.11.2025 US 202519385641
(71) Applicant: Vertiv Corporation, Westerville, OH 43082 (US)
(72) Inventor: VAN FOSSEN, John Nelson, Westerville, 43082 (US)
(74) Representative: Ambroz, Simon

(57) **Abstract**

A system for thermal protection in a power distribution apparatus is disclosed. A power distribution system includes first and second silicon-controlled rectifiers (SCRs) coupled to a heat sink. A first temperature sensor configured to sense a temperature of the first SCR while a second temperature sensor configured to sense a temperature of the second SCR. A control unit is configured to compare a temperature from the first temperature sensor to a plurality of temperature thresholds while the second SCR is disconnected from a load. The control unit generates a warning in response to the temperature reading from the first temperature sensor exceeding a first threshold but not a second threshold. The control unit may further cause disconnection of the first SCR from the load and connection of the second SCR to the load in response to the temperature reading from the first temperature sensor exceeding the second threshold.

## Description

### TECHNICAL FIELD

Apparatuses and methods are provided for transfers of thermal overloads in power distribution systems, such as those used for providing power to a data center or other large electrical/thermal load.

### BACKGROUND

Silicon controlled rectifiers (SCRs) are widely used various types of power distributions. For example, SCRs may be used in a power distribution system for providing power to a data center. An SCR is a unidirectional device that allows current to flow in one direction. Accordingly, an SCR may be used in rectification for converting alternating current (AC) power to direct current (DC) power. An SCR may also function as a solid-state switch, turning on or off large amount of power without the use of moving parts. Furthermore, since SCRs have a gate terminal that can turn the SCR on or off (e.g., allow current to flow or not flow), and SCR may be useful in voltage regulation functions.

### SUMMARY

An aspect of the disclosed examples includes a system for thermal protection in a power distribution apparatus utilizing SCRs. The system includes a power distribution system that includes a first silicon-controlled rectifier (SCR) coupled to a heat sink and a second SCR coupled to the heat sink. A first temperature sensor configured to sense a temperature of the first SCR while a second temperature sensor configured to sense a temperature of the second SCR. A control unit is configured to compare a temperature reading from the first temperature sensor to a plurality of temperature thresholds while the second SCR is disconnected from a load. The control unit may generate a first warning in response to the temperature reading from the first temperature sensor exceeding a first temperature threshold but not a second temperature threshold. The control unit may further cause disconnection of the first SCR from the load and connection of the second SCR to the load in response to the temperature reading from the first temperature sensor exceeding the second temperature threshold.

The first and second SCRs may be part of a power distribution, each coupled to an independent power source and arranged to provide power to a load.

The operation described above may be performed for the second SCR as well, with the same or similar comparisons being made, and the same actions being taken in response to exceeding the various thresholds. Accordingly, the control unit may switch back and forth between the first and second SCRs and thus the first and second power sources in providing power to the load (e.g., a data center).

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a diagram of a power distribution system using multiple power sources arranged to provide power to a load via corresponding SCRs, according to the principles of the present disclosure.
FIG. 2 is a flow diagram of a method for controlling a power distribution system utilizing SCRs, according to the principles of the present disclosure.
FIG. 3 generally illustrates a power distribution system for a data center, according to the principles of the present disclosure.

### DETAILED DESCRIPTION

Reference will now be made in detail to examples which are illustrated in the accompanying drawings, wherein like reference numerals refer to like elements throughout. In this regard, the examples may have different forms and may not be construed as being limited to the descriptions set forth herein.

It will be understood that the terms "include," "including," "comprise," and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these examples that are obvious to those of ordinary skill in the technical field to which these examples pertain may not be described herein in detail.

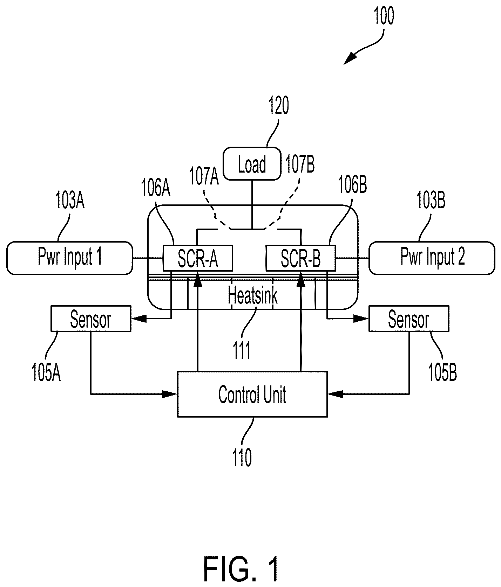

FIG. 1 is a diagram of a power distribution system using multiple power sources arranged to provide power to a load via corresponding SCRs. The system 100 includes a load 120 configured to receive power from one of input power sources 103A or 103B. Power from input power sources 103A and 103B are provided to the load by SCR 106A and 106B, respectively. Each of SCRs 106A and 106B implement a switching function, depicted here by switches 107A and 107B but actually implemented using a control terminal on the SCRs themselves. However, alternate examples are possible and contemplated in which switches 107A and 107B are implemented separately from SCRs 106A and 106B.

Each of SCRs 106A and 106B are coupled to a heatsink 110. Since the amount of current delivered from an active one of power sources 103A and 103B may be large, each of SCRs 106A and 106B may, when active, generate a significant amount of heat. Accordingly, heatsink 110 is provided to dissipate heat from the SCRs 106A and 106B in an effort to keep them operating within safe temperature limits.

The amount of heat generated by each of the SCRs 106A and 106B may be monitored by temperature sensors 105A and 105B, respectively. Temperature readings from these sensors are provided to control unit 110, which may perform various control actions based thereon.

In some examples, a single instance of an input power source (103A or 103B) provides power to the load (via a respective SCR 106A or 106B) while the other is in standby. Control unit 110 receives temperature readings from the temperature sensors 105A and 105B, and compares these readings for the SCR 106A or 106B (depending on the active power source). If a temperature reading exceeds a first threshold, control unit 110 may trigger a warning to indicate to, e.g., maintenance personnel, that the corresponding SCR is approaching a thermal limit. If a second (higher) threshold is exceeded, control unit 110 may switch the active power source. For example, if sensor 105A reports a reading exceeding the second threshold while power source 103A is providing power to load 120 via SCR 106A, operation may switch to cause power to be provided by power source 103B. To perform this switchover, control unit 110 may cause SCR 106A to enter the blocking mode, turning it off and thus exiting the forward conduction mode (and entering the blocking mode), while causing SCR 106B to enter the forward conduction mode (thereby turning it on). Heatsink 111, by virtue of being in physical contact with both SCRs 106A and 106B, continuously draws heat from both irrespective of the mode in which they are currently operating. For an inactive one of SCRs 106A and 106B, the rate of heat dissipation may be greater since no current is passing through.

Performing the switchover may allow some of the heat generated by SCR 106A to be dissipated via heat sink 110. Meanwhile, control unit 110 may begin monitoring the heat generated by SCR 106B via temperature readings received from sensor 105B, and perform the same functions as described above for SCR 106A. Accordingly, control unit 110 may switch back and forth between the power sources 103A and 103B as providing power to the load utilizing the functionality provided by SCRs 106A and 106B, while heatsink 111 dissipates heat from the SCRs 106A and 106B.

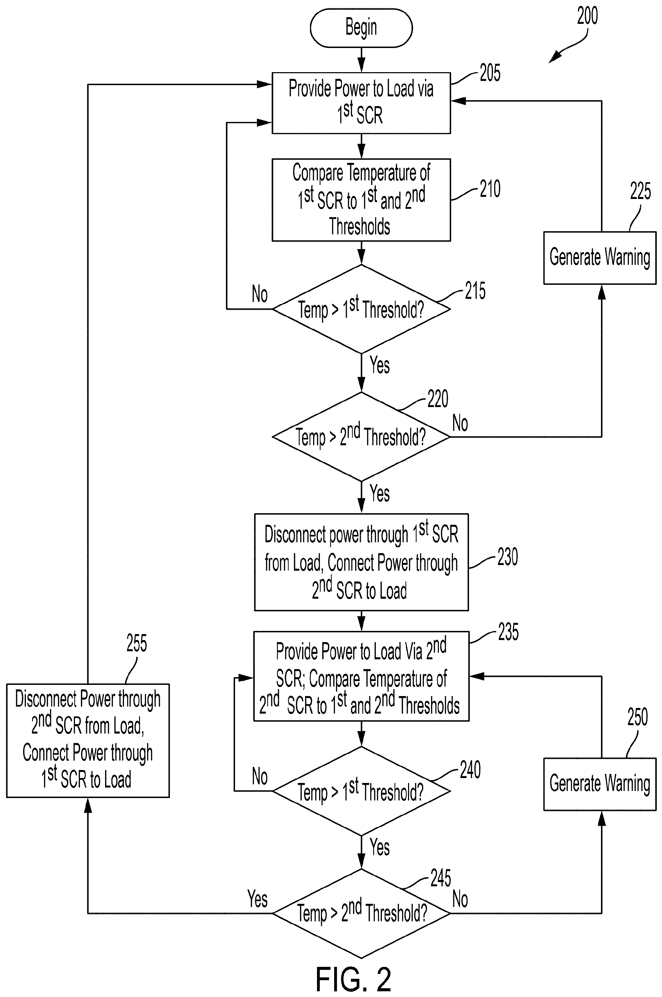

FIG. 2 is a flow diagram of a method for controlling a power distribution system utilizing SCRs. Method 200 may be performed with various examples of system 100 discussed above. It is further possible and contemplated that the method discussed herein may be extended to examples with more than two power sources, and thus more than two SCRs.

Method 200 includes providing power to a load via a first SCR (block 205), and comparing a temperature of the first SCR to first and second thresholds (block 210). The first threshold is less than the second threshold in this example. If the temperature is not greater than the first threshold (block 215, no), the method returns to block 205 and power continues to be provided to the load via the first SCR. If the temperature is great than the first threshold (block 215 yes) but not greater than the second threshold (block 220, no), a control unit generates a warning (block 225), but power continues to be provided from a power source to the load via the first SCR.

If the temperature is greater than the first threshold (block 215, yes) and the second threshold (block 220, yes), then power through the first SCR is disconnected from the load and power through the second SCR is connected to the load (block 230). Disconnecting power from the load via the first SCR may comprise changing the operating mode of the first SCR from the forward conduction mode to the blocking mode. Connecting power to the load via the second SCR may comprise changing the operating mode from the blocking mode to the forward conduction mode. After the switchover, power is provided to the load from a second power source through the second SCR, while temperatures of the second SCR are compared to the first and second thresholds.

If the temperature of the second SCR is not greater than the first threshold (block 240, no), operation returns to block 235 as the second power source continues to provide power to the load via the second SCR while the temperatures are monitored. If the temperature is greater than the first threshold (block 240, yes) but not greater than the second threshold (block 245, no), the control unit generates a warning (block 250) and operation returns to block 235. If the temperature is greater than the first threshold (block 240, yes) and the second threshold (block 2445, yes), power from the second power source through the second SCR is disconnected from the load while power from the first power source is connect to the load via the first SCR (block 255), with the method returning to block 205. The switchover may again be accomplished by changing the operating modes of the SCRs, e.g., the first SCR to the conduction mode from the blocking mode, while the second SCR is changed to the blocking mode from the conduction mode.

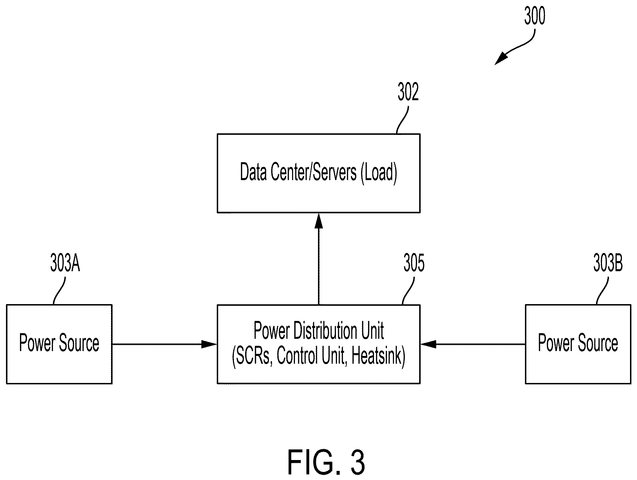

FIG. 3 generally illustrates a power distribution system for a data center according to the disclosure. The system 300 includes power source 303A and power source 303B, a power distribution unit 303B, and data center/servers 302. The power distribution unit 305 includes SCRs, a control unit, and a heatsink, similar to the apparatus shown in Fig. 1. Examples including separate switches coupled between the SCRs and the load are also possible and contemplated. Operation of the power distribution unit 305 in various examples is in accordance with the above, including the operation of switching between power sources based on temperature readings of the SCRs.

The data center/servers 302 represent an example load, and may comprise a number of different servers and other computers. However, the disclosure is not limited to such types of loads. Accordingly, the load 302 in other examples may be any load suitable for provision of power via an SCR.

It may be understood that the examples described herein may be considered in a descriptive sense only and not for purposes of limitation. Descriptions of features or aspects within each example may be considered as available for other similar features or aspects in other examples .

Described herein are also the following clauses:
1. A system for thermal protection, the system comprising: a first silicon-controlled rectifier (SCR) coupled to a heat sink; a second SCR coupled to the heat sink; a first temperature sensor configured to sense a temperature of the first SCR; a second temperature sensor configured to sense a temperature of the second SCR; and a control unit, wherein the control unit is configured to: compare a temperature reading from the first temperature sensor to a plurality of temperature thresholds while the second SCR is blocking power from a load; generate a first warning in response to the temperature reading from the first temperature sensor exceeding a first temperature threshold but not a second temperature threshold; and cause disconnection of power being provided to the load via the first SCR and connection of power to the load via the second SCR to the load in response to the temperature reading from the first temperature sensor exceeding the second temperature threshold.
2. The system of clause 1, wherein the control unit is further configured to: compare a temperature reading from the second temperature sensor to the plurality of temperature thresholds while the first SCR is blocking power from being provided to the load; generate a second warning in response to the temperature reading from the second temperature sensor exceeding the first temperature threshold but not the second temperature threshold; and cause disconnection of power provided to the load via the second SCR and connection of power to the load via the first SCR in response to the temperature reading from the second temperature sensor exceeding the second temperature threshold.
3. The system of clause 1, further comprising: a first power source coupled to the first SCR, wherein the first power source is configured to provide power to the load, via the first SCR when the first SCR is connected to the load; and a second power source coupled to the second SCR, wherein the second power source is configured to provide power to the load, via the second SCR, when the second SCR is coupled to the load.
4. The system of clause 3, wherein the first and second power sources are configured to generate AC power.
5. The system of clause 4, wherein the first and second SCRs are configured to convert AC power into DC power.
6. The system of clause 1, further comprising: a first switch that, when closed, couples the first SCR to the load; and a second switch that, when closed, couples the second SCR to the load.
7. The system of clause 1, wherein the control unit is further configured to: cause the first SCR to operate in a forward conduction mode to provide power to the load; and cause the first SCR to operate in a forward blocking mode to disconnect the first SCR from providing power to the load.
8. The system of clause 1, wherein the load comprises one or more server computers in a data center.
9. A method for thermal protection of a load, the method comprising: comparing, using a control unit, a temperature of a first silicon-controlled rectifier (SCR) to a first threshold and a second threshold, wherein the first SCR is coupled to a load configured to draw power from a first power source through the first SCR; generating a first warning in response to the temperature of the first SCR exceeding a first threshold but not exceeding a second threshold; decoupling, using the first SCR, power provided from the first power source to the load and coupling a second power source to provide power to the load via a second SCR in response to the temperature of the first SCR exceeding the second threshold; and comparing, using the control unit, a temperature of the second SCR to the first and second thresholds.
10. The method of clause 9, further comprising: generating a second warning in response the temperature of the second SCR exceeding the first threshold but not exceeding the first threshold.
11. The method of clause 9, further comprising: decoupling, using the second SCR, power provided to the load and coupling power from the first power source to the load, using the first SCR, in response to the temperature of the second SCR exceeding the second threshold.
12. The method of clause 9, further comprising generating AC power using the first power source and the second power source.
13. The method of clause 12, further comprising: converting, using the first SCR, AC power into DC power; and converting, using the second SCR, AC power into DC power.
14. The method of clause 9, further comprising: coupling, by closing a first switch, the first SCR to the load; de-coupling, by opening the first switch, the first SCR from the load; coupling, by closing a second switch, the second SCR to the load; and de-coupling, by opening the second switch, the second SCR from the load.
15. The method of clause 14, further comprising: operating the first SCR in a forward conduction mode to provide power to the load from the first power source; operating the first SCR in a forward blocking mode to disconnect power from the first power source to the load; operating the second SCR in the forward conduction mode to provide power to the load from the second power source; and operating the second SCR in the forward blocking mode to disconnect power from the second power source to the load.
16. A thermal management system comprising: a first silicon-controlled rectifier (SCR) configured to provide power from a first power source to an electrical load; a second SCR configured to provide power from a second power source to the electrical load; a heat sink coupled to and configured to remove heat from the first SCR and the second SCR; and a control unit configured to: control the first SCR and the second SCR such that the first SCR conveys power from the first power source to the electrical load and the second SCR blocks power from the electrical load; receive temperature values from first and second temperature sensors coupled to the first and second SCRs, respectively; compare a first temperature value received from the first temperature sensor to a first threshold and a second threshold; generate a first warning in response to the first temperature value exceeding the first threshold but not exceeding the second threshold; and perform a first switchover operation in response to the first temperature value exceeding the second threshold, wherein subsequent to performing the first switchover operation, first SCR blocks power from the first power source to the electrical load and the second SCR conveys power from the electrical load.
17. The thermal management system of clause 16, wherein the first SCR is configured to convert AC power received from the first power source to DC power, and wherein the second SCR is configured to convert AC power received from the second power source to DC power.
18. The thermal management system of any one of clauses 16 to 17, wherein the control unit is configured to: switch the first SCR to a forward conduction mode, wherein the first SCR is configured to convey power from the first power source to the electrical load in the forward conduction mode; switch the first SCR to a forward blocking mode, wherein the first SCR is configured to, when operating in the forward blocking mode, block power received from the first power source from being conveyed to the electrical load; switch the second SCR to the forward conduction mode, wherein the second SCR is configured to convey power from the second power source to the electrical load in the forward conduction mode; and switch the second SCR to the forward blocking mode, wherein the second SCR is configured to, when operating in the forward blocking mode, block power received from the second power source from being conveyed to the electrical load.
19. The thermal management system of clause 18, wherein the control unit is further configured to perform a second switchover operation in response to a second temperature value exceeding the second threshold, wherein the second temperature value is received from the second temperature sensor concurrent with the second SCR operating in the forward conduction mode, and wherein, subsequent to performing the second switchover operation, the second SCR blocks power to the electrical load from the second power source and the first SCR conveys power from the first power source to the electrical load.
20. The thermal management system of any one of clauses 16 to 19, further comprising: a first switch that, when closed, couples the first SCR to the electrical load; and a second switch that, when closed, couples the second SCR to the electrical load.

## Claims

1. A system for thermal protection, the system comprising:
a first silicon-controlled rectifier, SCR, coupled to a heat sink;
a second SCR coupled to the heat sink;
a first temperature sensor configured to sense a temperature of the first SCR;
a second temperature sensor configured to sense a temperature of the second SCR; and
a control unit, wherein the control unit is configured to:
compare a temperature reading from the first temperature sensor to a plurality of temperature thresholds while the second SCR is blocking power from a load;
generate a first warning in response to the temperature reading from the first temperature sensor exceeding a first temperature threshold but not a second temperature threshold; and
cause disconnection of power being provided to the load via the first SCR and connection of power to the load via the second SCR to the load in response to the temperature reading from the first temperature sensor exceeding the second temperature threshold.

2. The system of claim 1, wherein the control unit is further configured to:
compare a temperature reading from the second temperature sensor to the plurality of temperature thresholds while the first SCR is blocking power from being provided to the load;
generate a second warning in response to the temperature reading from the second temperature sensor exceeding the first temperature threshold but not the second temperature threshold; and
cause disconnection of power provided to the load via the second SCR and connection of power to the load via the first SCR in response to the temperature reading from the second temperature sensor exceeding the second temperature threshold.

3. The system of any preceding claim, further comprising:
a first power source coupled to the first SCR, wherein the first power source is configured to provide power to the load, via the first SCR when the first SCR is connected to the load; and
a second power source coupled to the second SCR, wherein the second power source is configured to provide power to the load, via the second SCR, when the second SCR is coupled to the load.

4. The system of claim 3, wherein the first and second power sources are configured to generate AC power.

5. The system of any one of the claims 3 to 4, wherein the first and second SCRs are configured to convert AC power into DC power.

6. The system of any preceding claim, further comprising:
a first switch that, when closed, couples the first SCR to the load; and
a second switch that, when closed, couples the second SCR to the load.

7. The system of any preceding claim, wherein the control unit is further configured to:
cause the first SCR to operate in a forward conduction mode to provide power to the load; and
cause the first SCR to operate in a forward blocking mode to disconnect the first SCR from providing power to the load.

8. The system of any preceding claim, wherein the load comprises one or more server computers in a data center.

9. A method for thermal protection of a load, the method comprising:
comparing, using a control unit, a temperature of a first silicon-controlled rectifier, SCR, to a first threshold and a second threshold, wherein the first SCR is coupled to a load configured to draw power from a first power source through the first SCR;
generating a first warning in response to the temperature of the first SCR exceeding a first threshold but not exceeding a second threshold;
decoupling, using the first SCR, power provided from the first power source to the load and coupling a second power source to provide power to the load via a second SCR in response to the temperature of the first SCR exceeding the second threshold.

10. The method of claim 9, further comprising:
generating a second warning in response the temperature of the second SCR exceeding the first threshold but not exceeding the first threshold;
and optionally, comparing, using the control unit, a temperature of the second SCR to the first and second thresholds.

11. The method of any one of the claims 9 to 10, further comprising:
decoupling, using the second SCR, power provided to the load and coupling power from the first power source to the load, using the first SCR, in response to the temperature of the second SCR exceeding the second threshold.

12. The method of any one of the claims 9 to 11, further comprising generating AC power using the first power source and the second power source.

13. The method of claim 12, further comprising:
converting, using the first SCR, AC power into DC power; and
converting, using the second SCR, AC power into DC power.

14. The method of any one of the claims 9 to 13, further comprising:
coupling, by closing a first switch, the first SCR to the load;
de-coupling, by opening the first switch, the first SCR from the load;
coupling, by closing a second switch, the second SCR to the load; and
de-coupling, by opening the second switch, the second SCR from the load.

15. The method of any one of the claims 9 to 14, further comprising:
operating the first SCR in a forward conduction mode to provide power to the load from the first power source;
operating the first SCR in a forward blocking mode to disconnect power from the first power source to the load;
operating the second SCR in the forward conduction mode to provide power to the load from the second power source; and
operating the second SCR in the forward blocking mode to disconnect power from the second power source to the load.
